(19) Europäisches Patentamt
European Patent Office
Office européen des brevets

(11) Publication number: **0 147 758**
A2

# (12) EUROPEAN PATENT APPLICATION

(21) Application number: 84115553.4

(22) Date of filing: 15.12.84

(51) Int. Cl.$^4$: C 08 L 67/02
C 08 L 71/02

(30) Priority: 27.12.83 US 565328

(43) Date of publication of application:
10.07.85 Bulletin 85/28

(84) Designated Contracting States:
BE DE FR GB IT NL

(71) Applicant: The B.F. GOODRICH Company
Dept. 0015 WHB-6 500 South Main Street
Akron, Ohio 44318(US)

(72) Inventor: Krosky, Raymond Peter
2907 Brookview Drive
Lorain Ohio 44053(DE)

(72) Inventor: Vrudny, Frank Darrel
2486 Londonderry Drive
Akron Ohio 44313(DE)

(74) Representative: von Kreisler, Alek, Dipl.-Chem. et al,
Deichmannhaus am Hauptbahnhof
D-5000 Köln 1(DE)

## (54) Polyesters modified with polymers of alkylene oxids.

(57) Thermoplastic compositions comprising blends of at least one thermoplastic solid polyester resin and at least one liquid homopolymer or copolymer of epihalohydrin wherein the copolymers contain at least 80% by weight of polymerized units of an epihalohydrin, said compositions being fusible on cooling and possessing exceptional property of rapid dissipation of electrical charge.

EP 0 147 758 A2

# POLYESTERS MODIFIED WITH POLYMERS OF ALKYLENE OXIDES

## BACKGROUND OF THE INVENTION

Polyester elastomers can be plasticized with a multitude of plasticizers to render them softer and for other reasons. Technical literature lists about 15 plasticizers for a polyester elastomer that is a block copolymer of a short-chain diol terephthalate and a long-chain polyether diol terephthalate. Of all these plasticizers, three are polymeric, i.e., polypropylene glycol sebacate MW8000 sold by Rohm & Hass under the trade name PARAPLEX® G-25, a polyester sold by Monsanto under the trade name SANTICIZER® 409, and a polyester MW 1850 sold by Union Carbide under the trade name FLEXOL® R2H. Whereas up to 50 weight parts of the latter two plasticizers can be used per 100 weight parts of the polyester elastomer having durometer hardness of 40D, the literature indicates that only up to 10 weight parts of the polypropylene glycol sebacate plasticizer can be used with the same polyester elastomer. This data indicates relative incompatibility of the polypropylene glycol sebacate plasticizer relative to the other two polymeric plasticizers. Since it is generally known that the harder grades of polyester elastomers are less compatible with plasticizers than the softer grades, it is expected that the polypropylene glycol sebacate plasticizer would be incompatible with the harder grades of the polyester elastomers even at a level of 10 weight parts.

It should be apparent that selection of polymeric plasticizers for polyester elastomers is limited even for the softer grades of the elastomer. The selection of polymeric plasticizers

must be even more restricted for the harder grades of polyester elastomers since the literature does not provide data for the harder grades of polyester elastomers having durometer hardness of greater than about 60.

SUMMARY OF THE INVENTION

This invention relates to compositions comprising a polyester elastomer and about 1 to 20 weight parts, per 100 weight parts of said elastomer, of a plasticizer selected from liquid polymers of at least one monomer containing the epoxide ring. Such compositions have improved impact strength and improved dissipation of electrical charges.

DETAILED DESCRIPTION OF THE INVENTION

The compositions of the invention described herein pertain to modified polyester elastomers which are modified by blending therewith an effective amount of a liquid polymer of an alkylene oxide to obtain improved properties, particularly impact strength and improved dissipation of electrical charges. On the basis of 100 weight parts of the polyester elastomer, amount of the modifying liquid polymer can vary from 1 to 20, preferably 5 to 10 weight parts. These compositions are generally prepared by mixing a particulate polyester elastomer with a liquid polymer at an elevated temperature to maintain reduced viscosity until a blend of the two ingredients is obtained. Such compositions can then be formed into film, sheets, and other products such as flexible fuel tank liners, where solvent resistance, flexibility and other properties are important.

Generally, in the preparation of suitable

polyesters, an ethylenically α,ß-unsaturated dicarboxylic acid such as maleic acid, fumaric acid, or itaconic acid is interesterified with an alkylene glycol or polyalkylene glycol having a molecular weight of about 1000 to 8000. Frequently, dicarboxylic acids free of ethylenic unsaturation such as phthalic acid, isophthalic acid, tetrabromophthalic acid, chlorendic acid, adipic acid, or succinic acid, are employed within a molar range of 0.25 to 15 moles per mole of the ,ß-unsaturated dicarboxylic acid. It will be understood that the appropriate acid anhydrides, when they exist, may be used and usually are preferred when available.

The glycol or polyhydric alcohol component of the polyester is usually stoichiometric or in slight excess with respect to the sum of the acids. The excess of polyhydric alcohol seldom will exceed 20-25 percent and usually is 2 to 10 percent.

These unsaturated polyesters may be generally prepared by heating a mixture of the polyhydric alcohol with the dicarboxylic acid or anhydride in the proper molar proportions at elevated temperatures, usually at 150° to 225°C for a period of time ranging from about 5 to 15 hours. Polymerization inhibitors such as t-butyl catechol may be advantageously added. It is also possible to prepare unsaturated polyesters directly from the appropriate oxides by copolymerization with an anhydride, e.g., propylene oxide can be used in place of propylene glycol and copolymerized with maleic anhydride or a mixture of maleic anhydride and phthalic anhydride.

Vinyl ester resins i.e., polyester resins, are generally prepared by reacting about equivalent proportions of a polyepoxide resin and an

unsaturated monocarboxylic acid wherein ether and ester linkages are formed and resulting resin has terminal, polymerizable unsaturated groups. For example, two moles of methacrylic acid may be reacted with one mole of a diepoxide resin to produce a vinyl ester resin.

Vinyl ester resins may also be prepared by reacting dicarboxylic acid half esters of hydroxyalkyl acrylates or methacrylates with polyepoxide resins. Another method of preparation is the reaction of glycidyl methacrylate or acrylate with the sodium salt of a dihydric phenol such as bisphonel A. Vinyl ester resins wherein the molecular weight of the polyepoxide is increase by reacting a dicarboxylic acid with the polyepoxide resin as well as acrylic acid are also known. Other difunctional compounds containing a group which is reactive with an epoxide group, such as an amine, mercaptan and the like, may be utilized in place of dicarboxylic acid.

Additionally, it is meant to include within the definition of vinyl ester resins those resins wherein the secondary hydroxyl group formed by the interaction of an epoxide group with a carboxylic acid group has been reacted with a dicarboyxlic acid anhydride to produce pendant carboxylic acid groups. A variety of saturated and unsaturated anhydrides similar to those described as useful in preparing polyester resins may be used in proportions of at least 0.1 mole of anyhydride per equivalent of hydroxyl group to an amount sufficent to react with each hydroxyl. A reaction temperature from about 25° to 150°C is suitable and any of the well known vinyl polymerization inhibitors may be added to prevent polymerization during the reaction.

Briefly, any of the known polyepoxides may

be employed in the preparation of vinyl ester resins useful in this invention. Useful polyepoxides are glycidyl polyethers of both polyhydric alcohols and polyhydric phenols, flame retardant epoxy resins based on tetrabromo bisphenol A, epoxy novolacs, epoxidized fatty acids or drying oil acids, epoxidized diolefins, epoxidized di-unsaturated acid esters as well as epoxidized unsaturated polyesters, so long as they contain more than one oxirane group per molecule. The polyepoxides may be monomeric or polymeric.

Preferred polyepoxides are glycidyl polyethers of polyhydric alcohols or polyhydric penols having weights per epoxide group of 150 to 2000. These polyepoxides are usually made y reacting at least about two moles of an epihalohydrin or glycerol dihalohydrin with one mole of the polyhydric alcohol or polyhydric phenol, and a sufficient amount of a caustic alkali to combine with the halogen of the halohydrin. The products are characterized by the presence of more than one epoxide group per molecule, i.e., a 1,2-epoxy equivalency greater than one.

Of particular interest herein are thermoplastic, linear, high molecular weight, solid polyesters that have the following recurring units in the polymer backbone:

$$-\overset{O}{\overset{\|}{C}}-O- \quad \text{and} \quad -O\overset{O}{\overset{\|}{C}}-O-$$

Thermoplastic polyesters with softening points above 50°C are satisfactory although polyesters with softening points above 100°C are preferred and especially those thermoplastic polyesters that have softening points falling in the range of 160 to

260°C. Saturated thermoplastic polyesters, i.e., free of ethylenic unsaturation, are preferred although unsaturated polyesters can also be used. Cross-linked polyesters are unsatisfactory since if significant cross-linking is present, the resulting polyester is not thermoplastic.

There are many commercially available linear thermoplastic polyesters which can be prepared by polymerizing one or more dicarboxylic acids, anhydrides or esters and one or more diols. Suitable examples include poly(1,4-cyclohexylene $C_{2-6}$ alkane dicarboxylates), poly($C_{2-4}$ alkylene terephthelates), poly(p-phenylene $C_{1-8}$ alkane dicarboxylates), poly($C_{3-10}$ alkylene and alkylene sulfonyl dibenzoates), poly($C_{2-10}$ alkylene naphthalene dicarboxylates). Preferred thermoplastic polyesters are derived from aromatic dicarboxylic acids, such as naphthalenic and phthalic acids, whereas more preferred polyesters are the poly (alkylene terephthalates) especially poly (tetramethylene terephthalate) or mixed polyphthalates derived from two or more glycols, two or more phthalic acids, or two or more glycols and two or more phthalic acids such as poly (alkylene tere-co-isophthalates).

An example of a group of suitable polyesters is Du Pont's Hytrel® resins. These are thermoplastic, linear elastomers, also referred to as segmented polyether esters since they contain both polyether and polyester segments. Such polyesters are high molecular-weight condensation polymers derived from aromatic dicarboxylic acids, polyalkylene ether glycols, and short chain diols. Such polymers are described in U.S. patent 3,023,192, which is incorporated herein by reference.

These resins are high-melting thermoplastic polyesters that can be prepared by transesterification of dimethyl terephthalate, polytetramethylene ether glycol of 600 to 2000 Mw molecular weight, and 1,4-butane diol. These copolymers possess a two-phase domain structure consisting of amorphous polyether ester soft segments and crystalline tetramethylene terephthalate hard segments. By proper selection of the relative amounts of soft and hard segments, polymers ranging from relatively soft elastomers to impact resistant elastoplastics can be obtained.

These copolyesters are more specifically defined as consisting essentially of (1) about 5 to 85% by weight of recurring long chain ester units derived from at least one dicarboxylic acid having molecular weight below about 300 and at least one poly(alkylene oxide)glycol having molecular weight of 400 to 6,000, and (2) about 15 to 95% by weight of short chain ester units having molecular weight of less than about 550 which are derived from at least one low molecular weight diol having molecular weight of less than about 250 and at least one low molecular weight dicarboxylic acid with molecular weight of less than about 300.

Suitable long chain poly(alkylene oxide) glycols have carbon-to-oxygen ratio of about 2.0 to 4.3 and include poly(ethylene oxide)glycol, poly(propylene oxide)glycols, poly(tetramethylene oxide)glycol, random or block copolymers of ethylene oxide and 1,2-propylene oxide, and random or block copolymers of tetrahydrofuran with minor amounts of a second monomer. The low molecular weight diols include acyclic alicyclic and aromatic dihydroxy compounds.

Preferred diols contain 2 to 15, especially 2 to 8 carbon atoms. Examples of suitable diols include ethylene, propylene, tetramethylene, pentamethylene, 2,2-dimethyltrimethylene, hexamethylene, and decamethylene glycols, as well as bis-phenols such as bis(p-hydroxy)diphenyl, bis(p-hydroxyphenol)methane, and bis(p-hydroxyphenol)propane. The dicarboxylic acids suitable herein include aliphatic, cycloaliphatic, and aromatic dicarboxylic acids with the latter acids containing 8 to 16 carbon atoms being especially preferred. Specific examples of the aromatic dicarboxylic acids include the phenylene dicarboxylic acids such as phthalic, terephthalic and isophthalic acids, their dimethyl ester derivatives and mixtures thereof.

U.S. patents 3,651,014 and 3,723,569 describe the polyether ester resins in greater detail, and are incorporated herein by reference. Furthermore, an article in Polymer Engineering and Science, for Dec. 1974, Vol. 14, No. 12, that describes this class of polyesters, is also incorporated herein by references. The article commences on p. 898 and is entitled "Segmented Polyether Ester Copolymers-A New Generation of High Performance Thermoplastic Elastomers", by G.K. Hoeschele".

Specific examples of the polyether ester copolymers noted above include Hytrel 7246 resin that has flexural modulus of 85,000 psi and durometer hardness of 70D; and Hytrel 6346 resin that has flexural modulus of 50,000 psi and a medium-high durometer hardness of 63D, and is described as a block copolymer of short-chain diol terephthalate and long-chain polyether diol terephthalate. Durometer hardness is measured in accordance with ASTM test D 2240.

As already noted, the prior art polymeric plasticizers are limited in number and those that are available appear to function more effectively with the softer grades of the termoplastic polyesters. This is consonant with technical literature that clearly teaches that plasticizers are generally less compatible with the harder polyesters. In view of the pronouncements of the prior art, this invention is particularly effective with the harder grades of thermoplastic polyesters having durometer hardness above 40D, preferably above 55D. This, of course, does not derogate from the fact that the plasticizers disclosed herein are even more effective with the softer grades of the polyester resins.

The polymers that can be used as plasticizers herein are liquid, uncured polymers of monomers that contain the epoxide group selected from 1,2-epoxides and 1,3 epoxides. Such liquid polymers are preferably prepared by polymerizing at least one epoxide containing a halogen, as defined below:

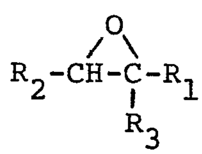

1,2-epoxide

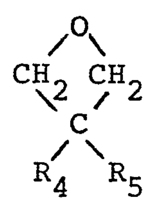

1,3-epoxide

where each $R_1$, $R_2$ and $R_3$ group is individually selected from hydrogen, alkyl, alkenyl, phenyl, haloalkyl, and haloalkoxyalkyl groups wherein at least one of the $R_1$, $R_2$ and $R_3$ groups is selected from haloalkyl and haloalkoxyalkyl groups.

The groups $R_4$ and $R_5$ are individually selected from hydrogen, alkyl, alkenyl, phenyl, haloalkyl, and haloalkoxyalkyl wherein at least one of $R_4$ and $R_5$ groups is selected from haloalkyl and haloalkoxyalkyl groups. In the above formulas, the alkyl and alkenyl groups contain 1 to 30, preferably 1 to 6 carbon atoms; the phenyl groups contain 6 to 20, preferably 6 to 7 carbon atoms; the haloalkyl groups contain 1 to 20, preferably 1 to 6 carbon atoms; and the haloalkoxyalkyl groups contain 1 to 6, preferably 1 to 2 carbon atoms in the alkyl group and 1 to 20, preferably 1 to 10 carbon atoms in the alkoxy group, with haolgens being selected from chlorine, bromine, fluorine, and iodine. As between the 1,2-epoxides and 1,3-epoxides, the 1,2-epoxides are preferred.

Especially suitable herein are halogen-containing epoxides that can be polymerized to form hydroxyl terminated liquid polymers useful as plasticizers. Such halogen-containing epoxides are defined by the following structural formulas:

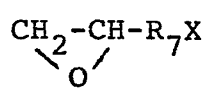 and 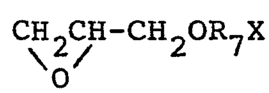

where X is a halogen selected from chlorine, bromine, fluorine, and iodine; and $R_7$ is an alkylene or an alkenylene group containing 1 to 15 carbon atoms, preferably 1 to 6 carbon atoms.

Exemplary of the halogen-containing epoxides are the epihalohydrins such as epichlorohydrin, epibromohydrin, epifluorohydrin, and epiiodohydrin; halogen-containing 1,2-epoxides such as 1,1-bis(chloromethyl) ethylene oxide, 3,3,3-trichloro-1,2-epoxypropane, 3,3-dichloro-1,2-epoxypropane,

3,3-dichloro-3-fluoro-1,2-epoxypropane, 3,3,3-trifuloro-1,2-epoxypropane, 4-chloro-1,2-epoxybutane, 3,4-dichloro-1,2-epoxybutane, 4,4,4-trichloro-1,2-epoxybutane, 5-chloro-1,2-epoxypentane, etc.,; haloalkyl glycidyl ethers such as 2-chloroethyl glycidyl ether, 2,2,2-trichloroethyl glycidyl ether, 2,2,2-trifluoroethyl glycidyl ether, 2-bromethyl glycidyl ether, 1,1,9-trihydrohexadecafluorononyl glycidyl ether, etc.; and halogen-containing 1,3-epoxides such as bis (chloromethyl) oxetene, bis(fluoromethyl) oxetene, etc. The preferred halogen substituents are fluorine, chlorine, and bromine. Any one of the above-defined halogen-containing epoxides or a mixture thereof can be copolymerized with selected comonomers, however, the preferred halogen-containing epoxides are epihalohydrins, especially epichlorohydrin.

The halogen-containing epoxides can be homopolymerized or one or more of the halogen-containing epoxides can be copolymerized with one or more of other comonomers. Up to about 20% by weight, preferably up to about 10% by weight, of the halogen-containing epoxide can be replaced with a suitable comonomer in the preparation of the liquid polymer. Particularly attractive comonomers are selected from alkylene oxides and glycidyl ethers, as respectively defined below:

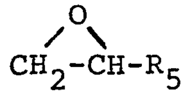 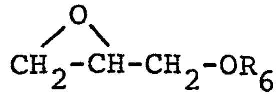

where $R_5$ is an aklyl or alkenyl group containing 1 to 30, preferably alkyl of 2 to 16 carbon atoms, branched or linear, or a phenyl group containing a

total of 6 to 20, preferably 6 to 7 carbon atoms; and $R_6$ is selected from akyl and alkenyl groups containing 1 to 30, preferably 2 to 16 carbon atoms, linear or branched, and phenyl groups containing 6 to 20, preferably 6 to 7 carbon atoms.

Illustrative examples of suitable alkylene oxides include 1,2-epoxybutane, 1,2-epoxypentane, 1,2-epoxyheptane, 1,2-epoxyoctane, 1,2-epoxyundecane, 1,2-epoxyeicosane, 1,2-epoxytriacontane, 3-butyl-1,2-epoxydecane, etc. Examples of suitable glycidyl ethers include butyl glycidyl ether, pentyl glycidyl ether, hexyl glycidyl ether, eicosyl glycidyl ether, triacontyl glycidyl ether, 2-ethylhexyl glycidyl ether, allyl glycidyl ether, phenyl glycidyl ether, etc.

The Dreyfuss U.S. patents 3,850,856 and 3,850,857 describe preparation of epihalohydrin polymers by the cationic ring-opening polymerization. The '857 Dreyfuss patent discloses a process for polymerizing epihalohydrin using as a catalyst a trialkyloxonium salt of an $HMF_6$ acid where M is a Group V element selected from phosphorus, arsenic, and antimony. The '856 Dreyfuss patent discloses an improvement over the '857 patent wherein polymerization of epihalohydrin is carried out in the presence of the same catalyst and also in the presence of water or ethylene glycol. The resulting polymers of epihalohydrin prepared pursuant to the Dreyfuss patent '856 have terminal hydroxyl groups.

Polymeric plasticizers suitable herein, and falling within the ambit of the invention claimed herein, can be prepared by the use of coordination catalysts, such as the aluminum alkyls, and water and polymerizing monomers selected from epoxides, as described above, especially epihalohydrin monomers.

Such liquid polymers are believed to be devoid of hydroxyl termination. An example of such a liquid polymer is poly(epichlorohydrin) having RSV viscosity in the range of 0.38 to 0.42 and molecular weight (Mn) of about 60,000.

More specifically, preparation of the hydroxyl terminated liquid polymers can be carried out by contacting a mixture of the monomers with a known cationic catalyst. Amount of catalyst employed can vary widely depending on polymerization conditions. An amount in the range of about 0.001 part by weight to about 5 parts by weight per 100 parts by weight of monomers, is satisfactory. Preferred catalyst level is, however, 0.004 to 1 part by weight per 100 parts by weight of monomers.

The hydroxyl functionality of the liquid polymers herein is provided by reacting the monomers in the presence of a modifier such as water, monohydric, dihydric, and polyhydric alcohols, and other hydroxyl-containing materials containing 1 to 20 carbon atoms, and 1 to 5 hydroxyl groups. Preferred examples of such materials include water and lower monohydric alcohols and dihydric and trihydric glycols. Amount of the modifier can be varied from about 0.01 to 30, preferably 0.05 to 15 weight parts, based on the weight of 100 parts of the monomers being polymerized. The amount of water or a hydroxyl-containing material employed in the process of the present invention is critical in order to provide hydroxyl functionality and to control molecular weight of the polymer. The use of a monohydroxy or a polyhydroxy modifier will determine if the polymer is monofunctional polyfunctional.

The temperature used in the polymerization rection is between about 0°C and 110°C. However, it

is preferred to employ temperatures in the range of about 10°C to about 80°C. At these temperatures the polymerization proceeds at the most desirable rate and polymers having the most desirable properties are produced. The polymerization reaction is exothermic and thus the reaction temperature is readily maintained by the controlled rate of catalyst addition. The time of the reaction will vary from about 1 hour to about 48 hours, preferbly 1 to 10 hours. Conversion of monomers to polymers can vary from about 30% up to 100%, preferably in excess of 70%. Conversion is determined by taking a sample at intervals and determining total solids in the sample.

Plasticized polyesters disclosed herein can be made by blending a solid, particulate polyester resin with a liquid hydroxyl terminated polymer. Blending can be accomplished in a mixer at room temperature or at an elevated temperature to reduce viscosity of the liquid polymer and thus facilitate mixing. Initially, when the polyester resin is contacted with the liquid polymer, the mixture is sticky, however, on continued mixing, the liquid polymer is absorbed by the polyester resin and the mixture becomes dry. With a relatively small batch that can be mixed in a laboratory Henschel mixer, it takes less than 10 minutes to blend a polyester resin and a liquid polymer plasticizer. The resulting blends are thermoplastic materials that fuse on cooling without vulcanization or curing agents. The blends can then be extruded in film form for further testing.

Analysis of the compositions disclosed herein has shown that the thermoplastic resins and the liquid polymers are compatible, the blends thereof have a single Tg which corroborates

compatibility, and there is no bleed out of the liquid polymer, which is also a confirmation of compatibility. Films made from the materials disclosed herein show that the presence of the liquid polymer in the polyester resin does not result in deterioration of the polyester resin properties and in fact, certain properties, such as dissipation of electrical charge, are unexpectedly improved.

## EXAMPLE 1

This example demonstrates incompatibility of a powdered poly(butadiene-acrylonitrile) and a liquid poly(butadiene-acrylonitrile) with a powdered polyester resin and compatibility of a hydroxyl terminated polyepichlorohydrin liquid polymer also with the same polyester resin.

The powdered polyester resin employed herein was Du Pont's Hytrel® 6346 polyester elastomer that has a medium-high durometer hardness of 63D, flexural modulus of 50,000 psi (345 MPa), softening Vicat point of 184°C, and is more specifically diescribed as a block copolymer of short-chain diol terephthalate and long-chain polyether diol terephthalate. Powdered poly(butadiene-acrylonitrile) was BFGoodrich Hycar 1422 resin which is highly gelled, has a molecular weight (Mn) of about 800,000 and weight ratio of butadiene to acrylonitrile of 67 to 33. Liquid poly(butadiene-acrylonitrile) was BFGoodrich Hycar 1312 x 5 resin with a viscosity at 50°C in the range of 9,000 to 16,000 cps, molecular weight (Mn) of about 1400, and weight ratio of butadiene to acrylonitrile of 67 to 33. The hydroxyl terminated liquid polymer was BFGoodrich Hydrin® 10 x 1 resin which is a non-crosslinked homopolymer of epichlorohydrin with a number average molecular

weight of about 1700 and Brookfield viscosity in the range of 220,000 to 320,000 cps, measured at 27°C.

Samples were prepared by blending 15 weight parts of the three plasticizer polymers with 100 weight parts of the thermoplastic polyester resin. Blending was done in a small laboratory Henschel mixer. The jacket of the mixer was warmed slightly with steam before the polyester resin was added. The plasticizer polymers were preheated to about 60°C. In the case of powdered poly(butadiene-acrylonitrile), it was not preheated and was added to a cool polyester resin. Mixing was continued until free-flowing products were obtained, the temperature of which was about 70°C. In the case of the powdered poly(butadiene-acrylonitrile), it was also preheated by was added to a cool polyester resin.

The compositions were then extruded on a 20/1 laboratory Brabender extruder using a 3/1 compression screw. A 2-inch wide film die was used that extruded film of 0.005" thickness. Extruded films were plied-up and then compression molded to obtain thicker samples for testing on a dynamic methanical analyzer (DMA) and microscopy analysis. Compression molding was done with a 3-minute preheat and a 3-minute press at 210°C. On cooling, sample film thickness was 0.060 of an inch.

The analysis of blend films showed that the polyester sample containing the powdered poly(butadiene-acrylonitrile) and the polyester sample containing the liquid poly(butadiene-acrylonitrile) each had a two phase system, indicating immiscibility or incompatibility, whereas the polyester sample containing hydroxyl terminated polyepichlorohydrin liquid polymer had a single phase system, indicating compatibility

although some plasticizer bleeding was present at the 15 phr plasticizer level.

EXAMPLE 2

This example demonstrates comparison testing between two prior art polymeric plasticizers and the hydroxyl terminated liquid polymer plasticizer disclosed herein, when blended with two thermoplastic polyester resins of relatively high hardness.

The two prior art polymeric plasticizers were Polyester Santicizer® 409 plasticizer in liquid form, available from Monsanto, and Polyester MW 1850 Flexol® R2H plasticizer, in liquid form, available from Union Carbide. The hydroxyl terminated liquid polymer plasticizer was Hydrin 10 x 1 polyepichlorohydrin used and described in Example 1. The two thermoplastic polyesters blended with the noted plasticizers were Du Pont's Hytrel® 6346 resin and Hytrel 7246 resin. Hytrel 6346 powdered resin is a polyester elastomer of 63 D durometer hardness and a flexural modulus of 50,000 psi (345 MPa) whereas Hytrel 7246 powdered resin is also a polyester elastomer of 70 D durometer hardness and a flexural modulus of 85,000 psi (585 MPa). Both of these polyester resins are also identified as copolyether esters that contain both polyether and polyester segments.

Eight samples were prepared, two being solely the polyester resins and the other six were blends of the polyester resins with one of the plasticizers.

Preparation of the samples was preceded by drying the polyester resins at 107°C for 4 hours to remove moisture. Mixer jacket of a small laboratory Henschel mixer was preheated on start-up with steam and a polyester resin was then added thereto. One of

the plasticizers, preheated to about 60°C to reduce viscosity for the sake of facilitating mixing, was then added to the polyester resin in the mixer and mixing was commenced and continued until the sticky mass became dry and free-flowing, indicating that the plasticizer was absorbed by the polyester resin. Mixing time was about 6 minutes and the stock temperature after mixing was completed was about 85°C. The eight samples are identified in Table I, below, where amounts are given in parts by weight.

TABLE I

| Material | Sample No. | | | | | | | |
|---|---|---|---|---|---|---|---|---|
| | 1 | 2 | 3 | 4 | 5 | 6 | 7 | 8 |
| Hytrel 6346 Polyester | 100 | 100 | 100 | 100 | - | - | - | - |
| Hytrel 7246 Polyester | - | - | - | - | 100 | 100 | 100 | 100 |
| Santicizer 409 Plastczr. | - | 10 | - | - | - | 10 | - | - |
| Flexol R2H Plastczr. | - | - | 10 | - | - | - | 10 | - |
| Hydrin 10x1 Plastczer. | - | - | - | 10 | - | - | - | 10 |

The samples were extruded on a 20/1 laboratory Brabender extruder using a 3/1 compression screw and a 2-inch wide film die. Brabender conditions and film thickness for the samples are given in Table II, below:

TABLE II

| | Sample No. | | | | | | | |
|---|---|---|---|---|---|---|---|---|
| | 1 | 2 | 3 | 4 | 5 | 6 | 7 | 8 |
| Screw rpm | 50 | 50 | 50 | 50 | 50 | 50 | 50 | 50 |
| Feed Temp.,°C | 195 | 195 | 195 | 195 | 205 | 205 | 205 | 205 |
| Barrel Temp.,°C | 215 | 215 | 215 | 215 | 220 | 220 | 220 | 220 |
| Die Temp.,°C | 220 | 220 | 220 | 220 | 225 | 225 | 225 | 225 |
| Film Thick." | 0.012 | 0.015 | - | 0.017 | 0.010 | 0.010 | - | 0.011 |

Flexol R2H plasticizer was incompatable with both Hytrel 6346 and Hytrel 7246 polyester resins. Hytrel 6346/Flexol R2H blend extruded film was very tacky with plasticizer bleed out. Hytrel 7246/Flexol R2H blend would not extrude due to slipping on extruder screw and plasticizer bleed out.

Santicizer 409 plasticizer did not show any plasticizer bleed out initially with Hytrel 6346 or Hytrel 7246 resins. After four days storage at room temperature, plasticizer bleeding and incompatability was evident with both Hytrel elastomers plasticized with the Santicizer 409 plasticizer.

The film samples were plied up, as described in Example I, and were further tested. These tests indicated that oil, fuel, and water resistance was very good for the Hytrel 6346 and 7246 resins containing the hydroxyl terminated liquid polymer plasticizer and these examples showed an exceptionally attractive electrical property for dissipating an electrical charge.

The test for measuring the property of electrical dissipation involved the formation of a film sample about the size of a quarter and a thickness of about 0.014 mils. Thickness, it should be noted, is of no import in this test, however. A static charge of 900 volts was impressed over the sample for 1 minute and then the charge was removed and the sample was allowed to dissipate the applied voltage. Dissipation of electrical charge was then measured by noting the time (in seconds) it took the sample to reach 800 vols, 600 volts, 400 volts, 300 volts, 200 volts, and 100 volts. Also, voltage was measured after a 5-minute discharge period. Results, which are set forth in Table III, below, were obtained with a Static Charge Analyzer Model 276A at 23°C and 50% humidity.

TABLE III

| | Sample No. | | | | | | | |
|---|---|---|---|---|---|---|---|---|
| | 1 | 2 | 3 | 4 | 5 | 6 | 7 | 8 |
| Disch.to 800volts,sec. | 15 | - | - | 0 | 40 | - | - | 0 |
| Disch.to 600volts,sec. | 56 | - | - | 6 | 195 | - | - | 3 |
| Disch.to 400volts,sec. | 214 | - | - | 8 | >300 | - | - | 6 |
| Disch.to 300volts,sec. | 276 | - | - | 12 | >300 | - | - | 8 |
| Disch.to 200volts,sec. | >300 | - | - | 15 | >300 | - | - | 10 |
| Disch.to 100volts,sec. | >300 | - | - | 32 | >300 | - | - | 17 |
| Voltage at 5-min.Disch. | 270 | - | - | >10 | 500 | - | - | >10 |

The property of dissipation of electrical charge of the polyester resins modified by the hydroxyl terminated polyepichlorohydrin liquid polymer is incredible compared with the unmodified polyester resins. Whereas it took 214 seconds for the unmodified Hytrel 6346 polyester sample #1 to dissipate voltage from initial 900 volts to 400 volts, the Hytrel 6346 polyester modified with the hydroxyl terminated polyepichlorohydrin liquid polymer, i.e., sample #4, dissipated same amount of electrical charge in just 8 seconds. Similar comparison results were obtained for the unmodified and modified Hytrel 7246 polyester resin.

Based on the results obtained, the hydroxyl terminated liquid polyepihalohydrins can function as processing aids, plasticizers, and electrical conductive agents when blended with solid thermoplastic polyester resins.

CLAIMS

1. Thermoplastic composition of matter comprising a blend of a thermoplastic polyester resin and a sufficient amount of a liquid polymer of an epoxide monomer to plasticize the polyester resin.

2. Composition of claim 1 wherein amount of said liquid polymer is 1 to 20 weight parts per 100 weight parts of said polyester resin.

3. Composition of claim 2 wherein said liquid polymer is in an uncured state and said composition has a single Tg.

4. Composition of claim 3 wherein said polyester resin contains both polyether and polyester segments and has durometer hardness above about 40D.

5. Composition of claim 4 wherein said polyester resin has durometer hardness above about 55D.

6. Composition of claim 3 wherein said liquid polymer is selected from hydroxyl terminated polyepihalohydrins.

7. Composition of claim 3 wherein said liquid polymer is selected from hydroxyl terminated homopolyers of halogen-containing epoxides and copolymers of greater than about 80 weight percent of monomer selected from halogen-containing epoxides and mixtures thereof and less than about 20 weight percent of a comonomer selected from alkylene oxides, glycidyl ethers, and mixtures thereof.

8. Composition of claim 7 wherein said halogen-containing epoxides, alkylene oxides and glycidyl ethers are defined respectively as follows:

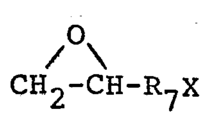 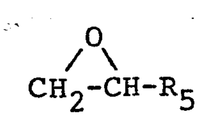 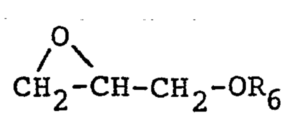

wherein X is a halogen; $R_5$ is selected from alkyl and alkenyl groups containing 1 to 30 carbon atoms, and a phenyl group containing 6 to 20 carbon atoms; $R_6$ is selected from alkyl and alkenyl groups containing 1 to 30 carbon atoms, and phenyl groups of 6 to 20 carbon atoms; and $R_7$ is selected from alkylene and alkenylene groups of 1 to 15 carbon atoms.

9. Composition of claim 8 wherein $R_5$ is selected from alkyl and alkenyl groups of 2 to 16 carbon atoms, and phenyl groups of 6 to 7 carbon atoms; $R_6$ is selected from alkyl and alkenyl groups of 2 to 16 carbon atoms; and $R_7$ is selected from alkylene and alkenylene groups of 1 to 6 carbon atoms.

10. Composition of claim 9 wherein said halogen-containing epoxide is epichlorohydrin and proportion of said comonomer in said copolymer is up to about 10 weight percent; said polyester resin consisting essentially of (1) about 5-85 weight percent of recurring long chain ester units derived from at least one dicarboxylic acid having a molecular weight below about 300 and at least one poly(alkylene oxide) glycol having a molecular weight between about 400-6,000 and a carbon-to-oxygen ratio of about 2.0-4.3 and (2) about 15-95 weight percent of short chain ester units which are derived from at least one low molecular weight diol having a molecular weight of less than about 250 and at least one low molecular weight dicarboxylic acid having a molecular weight of less than about 300.

11. Composition of claim 9 wherein amount of said liquid polymer is 5 to 10 weight parts per 100 weight parts of said polyester resin having a durometer hardness above about 55D.

12. Composition of claim 1 wherein said polyester resin is selected from Hytrel 6346 resin, Hytrel 7246 resin, and mixtures thereof, and said liquid polymer is selected from hydroxyl terminated homopolyers and copolymers of epichlorohydrin wherein said copolymers contain at least 80 weight percent polymerized units of epichlorohydrin, amount of said liquid polymer being 5 to 10 weight parts per 100 weight parts of said polyester resin.

13. Composition of claim 12 devoid of vulcanizers and curing agents that is fusible on cooling.

14. Composition of claim 13 wherein said liquid polymer is selected from homopolymers of epichlorohydrin having viscosity in the range of 220,000 to 320,000 cps, measured at 27°C.